Europäisches Patentamt

European Patent Office

Office européen des brevets

(11) Publication number: **0 513 839 A1**

# EUROPEAN PATENT APPLICATION

(21) Application number: **92108353.1**

(22) Date of filing: **18.05.92**

(51) Int. Cl.5: **B62B 3/10**

(30) Priority: **17.05.91 IT BO910096 U**

(43) Date of publication of application:
**19.11.92 Bulletin 92/47**

(84) Designated Contracting States:
**BE DE ES FR GB NL**

(71) Applicant: **FILOMARKET S.r.l.**
**Via Pasquala, 4/h**
**I-40026 Imola(IT)**

(72) Inventor: **Tabanelli, Ezio**
**Via Pasquala. 4/l**
**I-40026Imola(IT)**

(74) Representative: **Jorio, Paolo et al**
**Studio Torta, Via Viotti, 9**
**I-10121 Torino(IT)**

(54) **An improved shopping trolley.**

(57) The shopping trolley 1 comprises a metal base frame (2) and a basket (3) supported by the frame (2). This is provided with a first wheel (4) positioned at the front of the frame (2) and on a median axis thereof, two second wheels (5) positioned at the centre of the frame (2) and to either side of the median axis and two third wheels (6) positioned at the rear of the frame (2) and to either side of the median axis.

Fig.1

EP 0 513 839 A1

The present invention relates to an improved shopping trolley.

As is known, shopping trolleys which are currently available commercially comprise a base frame provided with two front wheels and two rear wheels and supporting a basket.

The trolleys described above have several disadvantages due primarily to the arrangement and number of their wheels. In particular, it is notable that, when the trolley is fully loaded, it is at times uncontrollable in that it tends to veer off to one side. Moreover, with such a trolley it is difficult to traverse gradients and to go up or down steps.

The object of the present invention is to provide a shopping trolley which does not have the stated disadvantages and which, therefore, has greater stability and manoeuvrability when fully loaded and which can be made to go up and down steps easily.

According to the present invention there is provided a shopping trolley comprising a metal base frame and a basket supported by the said frame, characterised by the fact that the said frame is provided with a first wheel positioned at the front of the said frame and on a median axis thereof, two second wheels positioned at the centre of the said frame and to either side of the said median axis, and two third wheels positioned at the rear of the said frame and to either side of the said median axis.

For a better understanding of the present invention a preferred embodiment will now be described, purely by way of non-limitative example, with reference to the attached drawings, in which:

Figure 1 is a side view of a shopping trolley formed according to the principles of the present invention; and

Figure 2 is a plan view of a base frame of the trolley of Figure 1.

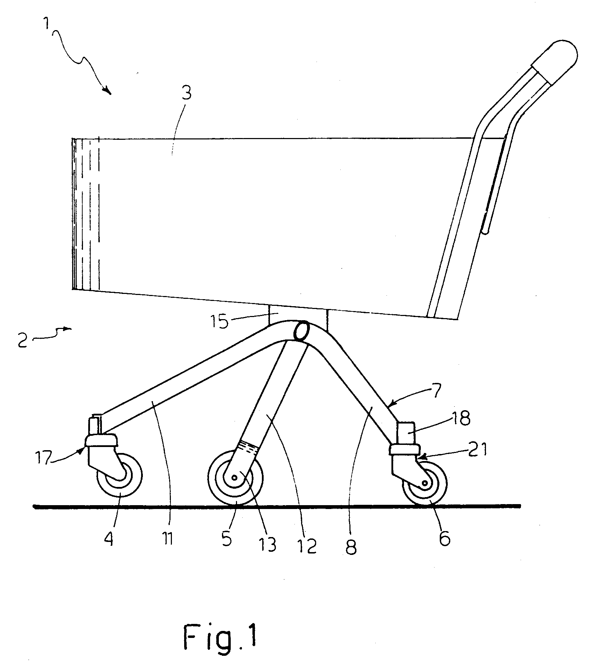

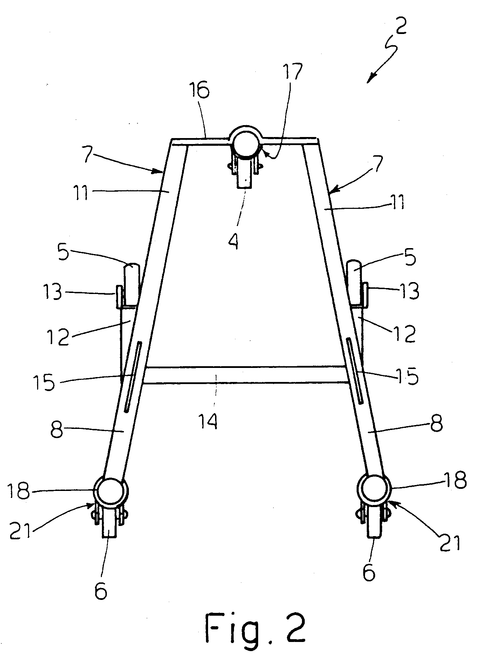

As illustrated in Figures 1 and 2, a shopping trolley, generally indicated with the reference numeral 1, comprises a metal base frame 2 which supports above it a basket 3, preferably of metal wire mesh, and provided underneath with five wheels. The first wheel is indicated 4 and is positioned at the front of the frame 2 and on a median axis thereof. Two wheels indicated 5 are positioned at the centre of the frame 2 and to either side of the said median axis. The other two wheels are indicated 6 and are positioned at the rear of the frame 2 and to either side of the said axis. The frame 2 includes two inverted V-shape bars 7. As illustrated in Figure 2, the bars 7 lie in respective planes which converge towards the front of the trolley 1. For this reason, the distance between the rear wheels 6 is greater than the distance between the central wheels 5.

Each bar 7 has a rear section 8 and a front section 11. This latter is longer than the section 8 and converges with the ground at a smaller angle of incidence than that of the section 8. From the vertex of each bar 7 there extends downwardly, and towards the front of the carriage 1, a respective bar 12 which supports the hub of a corresponding central wheel 5 in a fork 13. The bar 12 lies in a plane orthogonal to the ground and, for this reason, lies outside the space defined between the bars 7. The bars 7 are mechanically connected at the said vertices by a transverse bar 14. Moreover, the frame 2 supports the basket 3 at these vertices by means of brackets 15.

With reference to Figure 2, the free ends of the front sections 11 of the bars 7 are connected by a plate 16 which lies in a vertical plane. In the central part of the plate 16 is formed a semi-cylindrical fixing seat for an upper part of a support unit 17 for the front wheel 4 which is of the pivoting castor type. To the free end of each of the rear sections 8 of the bars 7 is fixed a respective vertical sleeve 18 for the attachment of an upper part of a support unit 21 for a corresponding rear wheel 6 which is of the castor type. The fixing system and the support unit for the wheels 4 and 6 have been illustrated in a schematic manner since they are of known types and, in particular, the present applicant has filed several Italian Industrial Utility model applications on these details among which that in which these details are better illustrated is the application filed on 7/3/1988 under number 4756 B/88 and entitled "A Shopping Trolley of improved type"

With reference to Figure 1 it is to be noted that the distance between the straight line defined by the common axes of rotation of the central wheels 5 and the straight line defined by the common axes of the rear wheels 6 is greater than the distance between the said straight line defined by the central wheels 5 and the axis of rotation of the front wheel 4. In substance the central wheels 5 are closer to the front wheel 4 than to the rear wheels 6. It is to be noted moreover that the lengths of the sections 8 and 11 and of the bars 12 and the distribution of the load constituted by the basket 3 are such that, when the trolley is empty, only the central wheels 5 and the rear wheels 6 contact the ground. The front wheel 4 remains spaced from the ground by a distance of several centimetres. Finally it is to be seen that the central wheels 5 are not of the pivoting castor type and have a greater diameter than the others.

In use of the trolley 1, when lightly loaded, the central and rear wheels 5 and 6 rest on the ground, whilst, when fully loaded, the front wheel 4 can also rest on the ground. The arrangement of the central wheels 5 does not obstruct in any way the introduction of the basket 3 of one trolley into the basket 3 of a successive trolley. The trolley 1 turns on a smaller radius of curvature than currently known trolleys since, during rotation, the corresponding central wheel 5 acts as the pivot for this rotation. Consequently it has both a greater stability when loaded and greater manoeuvrability whatever the load. The fact that the front wheel 4 remains raised from the ground facilitates movement over broken ground or the climbing or descending of steps. This is achieved in both directions of movement since the trolley 1 acts as a rocker whose fulcrum is defined by the central wheels 5. In fact, it is sufficient either to displace the load towards the front wheels 4 or to raise the rear part of the trolley so the that the front wheel 4 and the central wheels 5 rest on the ground so as to raise the rear wheels 6 from the ground and permit climbing or descending in reverse as well.

From what has been described the advantages achieved with embodiment of the present invention will be apparent.

In particular the trolley one has greater stability and manoeuvrability and can turn on a smaller radius of curvature than current trolleys. Moreover the installation of five wheels is easy to achieve so that the production cost of the trolley 1 is low.

Finally, it is clear that the trolley 1 described and illustrated here can have modifications and variations introduced thereto without thereby departing from the protective ambit of the present invention.

## Claims

1. A shopping trolley comprising a metal base frame (2) and a basket (3) supported by the said frame (2), characterised by the fact that the said frame (2) is provided with a first wheel (4) positioned at the front of the frame (2) and on a median axis thereof, two second wheels (5) positioned at the centre of the said frame (2) and to either side of the said median axis and two third wheels (6) positioned at the rear of the said frame (2) and to either side of the said median axis.

2. A shopping trolley according to Claim 1, characterised by the fact that the distance between the straight line defined by the axes of rotation of the said second wheels (5) and the straight line defined by the axes of rotation of the said third wheels (6) is greater than the distance between the said straight line defined by the said second wheels (5) and the axis of rotation of the said first wheel (4).

3. A shopping trolley according to Claim 2, characterised by the fact that, with little or no load, the said second (5) and third (6) wheels touch the ground whilst the said first wheel (4) remains raised from the ground by a small distance.

4. A shopping trolley according to at least one of the preceding claims, characterised by the fact that the diameter of the said second wheels (5) is greater than the diameter of the said first wheel (4) and of the said third wheels (6).

5. A shopping trolley according to at least one of the preceding claims, characterised by the fact that the said frame (2) comprises two first bars (7) of inverted V-shape lying in respective planes which converge towards the front of the said frame (2) such that the distance between the said third wheels (6) is greater than the distance between the said second wheels (5).

6. A shopping trolley according to Claim 5, characterised by the fact that each of the said first bars (7) has a rear section (8) and a front section (11); this latter being longer than the said rear section (8) and converging with the ground at an angle of incidence less than that of the angle of incidence of the said rear section (8).

7. A shopping trolley according to Claim 6, characterised by the fact that it includes a mechanical connection element (16) for interconnecting the front ends of the said front sections (11) of the said first bars (7); the said element (16) being formed centrally with a semi-cylindrical fixing seat for an upper part of a support unit (17) for the said first wheel (4) which is of the pivoting castor type.

8. A shopping trolley according to Claim 6 and/or 7, characterised by the fact that to the rear end of each of the said rear sections (8) of the said first bars (7) there is fixed a respective sleeve (18) which forms a fixing seat for an upper part of a support unit (21) for a corresponding said third wheel (6) which is of the pivoting castor type.

9. A shopping trolley according to any one of Claims 5 to 8, characterised by the fact that a respective second bar (12) extends downwardly from the vertex of each said first bar (7) towards the front of the frame (2) and supports the hub of the corresponding said second wheel (5) in a fork (13).

10. A shopping trolley accordingly to Claim 9, characterised by the fact that the said second bars (12) lie in respective planes orthogonal to the ground, being outside the space defined between the said first bars (7).

11. A shopping trolley according to any one of Claims 5 to 10, characterised by the fact that the vertices of the said first bars (7) are mechanically connected by a transverse bar (14).

12. A shopping trolley according to any one of Claims 5 to 11, characterised by the fact that the said first bars (7) support the said basket (3) by means of brackets (15) at the vertices defined by the first bars (7) themselves.

Fig.1

Fig. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3 434 178 (R. WANZL KG) | 1-3 | B62B3/10 |
| A | * abstract; figures * | 4,5 | |
| | --- | | |
| X | EP-A-0 222 480 (M. SILZER) | 1,2 | |
| | * page 8, line 18 - page 8, line 22; figures 1,4,10 * | | |
| | --- | | |
| A | EP-A-0 364 655 (I.M.PAS S.R.L) | 5-8,11, 12 | |
| | * abstract; figures 1-5 * | | |
| | ----- | | |

TECHNICAL FIELDS
SEARCHED (Int. Cl.5 )

B62B

The present search report has been drawn up for all claims

| Place of search | Date of completion of the search | Examiner |
|---|---|---|
| THE HAGUE | 25 AUGUST 1992 | FRANKS B.G. |